# FASCICULE DE BREVET EUROPEEN

(11) **EP 3 004 555 B1**
(45) Date de publication et mention de la délivrance du brevet: **18.10.2017**
(21) Numéro de dépôt: 14731757.2
(22) Date de dépôt: 28.05.2014
(51) Int. Cl.: F01D 5/14, B23P 11/02, B23P 15/04, F16B 4/00

(54) **AUBE CREUSE ET PROCÉDÉ DE FABRICATION ASSOCIÉ**
HOHLE SCHAUFEL UND ZUGEHÖRIGES HERSTELLUNGSVERFAHREN
HOLLOW VANE AND ASSOCIATED PRODUCTION METHOD

(30) Priorité: 28.05.2013 FR 1354805
(43) Date de publication de la demande: 13.04.2016
(73) Titulaire: SNECMA, 75015 Paris (FR)
(72) Inventeur: FRIBOURG, Guillaume, F-77550 Moissy-CramayeL Cedex (FR); DELALEAU, Pierre, F-77550 Moissy-CramayeL Cedexy (FR); TELLIER, Florian, F-77550 Moissy-Cramayeyl Cedex (FR)
(74) Mandataire: Brevalex
(86) Numéro de dépôt international: PCT/FR2014/051273
(87) Numéro de publication internationale: WO 2014/191691

(56) Documents cités:
- EP-A2- 1 760 266
- FR-A1- 2 956 875
- FR-A1- 2 978 196
- US-A1- 2011 135 483

## Description

Le sujet de l'invention présente est une aube creuse, ainsi que son procédé de fabrication.

L'aube dont il est question peut être une OGV (Outlet Guide Vane), c'est-à-dire une aube fixe d'un redresseur de l'écoulement des gaz, en aval d'un étage d'aubes mobiles appartenant au rotor d'une turbomachine, sans que d'autres genres d'aubes soient exclus.

Les aubes peuvent être pleines, ou au contraire creuses quand on veut diminuer leur poids. Elles comportent alors une cavité interne et sont souvent construites en deux parties : une partie principale englobant la cavité, comportant une face ouverte pour permettre d'accéder à la cavité, et la réaliser par usinage, et un capot qu'on assemble à la partie principale, de manière à clore l'ouverture et à former une face extérieure lisse et continue, nécessaire à un fonctionnement aérodynamique correct de l'aube. On peut citer les documents FR 2 956 875 A et FR 2 978 196 A pour illustrer certaines conceptions connues d'aubes creuses.

Les modes d'assemblage traditionnels entre le capot et la partie principale sont le soudage et le collage. Or ces deux modes d'assemblage possèdent tous deux certains inconvénients : le soudage s'accompagne d'un abattement mécanique sur le joint soudé par rapport aux propriétés de la matière de base de l'aube, de contraintes résiduelles et de déformations dans l'aube, et implique des opérations d'usinage coûteuses pour rectifier la forme de la face extérieure ; et le collage peut avoir une tenue incertaine sur de longues durées, est assez sujet à la propagation de fissures, dès qu'il en apparait, ainsi qu'à l'attaque de certains agents chimiques, et impose souvent un surplus de matière pour garantir la jonction des pièces sur le pourtour complet, qui dépasse du joint et qu'il faut retirer après le durcissement pour retrouver la surface extérieure lisse indispensable à une aube. Des contrôles de la qualité de l'assemblage sont nécessaires, et le remplacement du capot pendant des campagnes d'entretien est difficile ou impossible. C'est pourquoi une amélioration de l'assemblage a été recherchée. Elle constitue le sujet de l'invention.

Celle-ci concerne, selon un aspect général, une aube creuse comprenant une partie principale et au moins un capot, le capot étant monté dans une ouverture de la partie principale de façon à clore l'ouverture et à former avec la partie principale une face extérieure, essentiellement continue, de l'aube, la partie principale comprenant encore une cavité communiquant à la face extérieure par l'ouverture, caractérisée en ce que le capot comprend au moins une saillie, s'étendant sur une partie d'une épaisseur du capot à distance de la face extérieure et sur des portions opposées de pourtour du capot, et la partie principale comprend au moins un élargissement de l'ouverture, situé à distance de la face extérieure et dans lequel la saillie du capot pénètre.

L'ajustement se fait ainsi par un simple emboîtement de formes, sans qu'aucun soudage ni collage soit nécessaire. Un collage peut tout de même être pratiqué sans inconvénient afin de parfaire la liaison si nécessaire. Les saillies du capot, retenues dans les élargissements de l'ouverture, empêchent l'extraction ou la chute du capot par la suite, lors du fonctionnement de la pièce. L'ajustement peut être très précis. Il faut aussi souligner, comme on l'abordera plus loin, que le procédé de fabrication ou d'assemblage d'une telle aube est très simple et n'implique aucun dommage au capot ni à la partie principale, aucune déformation plastique n'étant notamment produite.

Selon divers perfectionnements qu'on va maintenant énumérer, le capot peut être monté sans jeu dans l'ouverture de la partie principale, entre la saillie et la face extérieure, et la saillie est logée dans l'élargissement avec du jeu. La face extérieure de l'aube est alors lisse et continue. Les contraintes de serrage qui s'exercent alors à la jonction du capot et de la partie principale sont, avantageusement, purement élastiques.

Le capot peut être joint à la partie principale sans aucun matériau intermédiaire de liaison, ce qui simplifie la structure de l'aube et sa fabrication, tout en permettant d'éviter les risques de vieillissement inhérents à certains de ces matériaux.

La saillie et l'élargissement peuvent s'étendre soit sur des pourtours entiers de l'ouverture et du capot, soit seulement sur des portions superposables de ces pourtours : cela est en soi indifférent à la bonne exécution de l'invention, pourvu que l'imbrication des saillies du capot dans les élargissements de l'ouverture suffise à empêcher l'extraction.

L'ouverture peut former une feuillure comprenant une face d'appui d'une face de fond, opposée à la face extérieure, du capot : l'appui du capot permet de le placer à un enfoncement déterminé dans l'ouverture, où sa face extérieure affleure exactement à la face extérieure de la partie principale.

Les aubes creuses sont souvent pourvues de nervures qui divisent la cavité interne. Avec l'invention, il est possible de faire s'étendre les nervures jusqu'à la face extérieure de la partie principale, en leur faisant aussi diviser l'ouverture, et un capot tel que défini précédemment est alors installé sur chacune des portions de l'ouverture. Une meilleure rigidité de l'aube, à l'égard des vibrations par exemple, peut alors être espérée, grâce à la diminution de superficie des capots. Comme l'assemblage du capot ou des capots à la partie principale peut s'accomplir très facilement, la présence d'une pluralité de capots n'est pas gênante.

La surface de raccordement entre la partie principale et le capot peut être lisse après le montage du capot, mais cela n'est pas toujours recherché, et dans une conception tout aussi valable, la saillie et l'élargissement s'étendent devant des bords d'attaque et de fuite de l'aube, le capot saillant hors de la partie principale devant le bord de fuite et rentrant dans la partie principale devant le bord d'attaque, au moyen soit d'une épaisseur décroissante du capot du bord d'attaque au bord de fuite, soit d'une profondeur décroissante de l'élargissement du bord d'attaque au bord de fuite..

La saillie et l'élargissement peuvent être constitués par des degrés de variation de section, ou par des bords obliques qui leur donnent ainsi des sections s'élargissant continuellement devant la face extérieure de l'aube.

Les pentes de tels bords obliques sont avantageusement faibles, de 5° au plus par exemple, d'angle avec une direction perpendiculaire à la face extérieure de l'aube. Les angles peuvent être différents pour la partie principale et le capot, afin de favoriser un coincement du capot quand il a été installé.

Le procédé de fabrication d'une telle aube peut s'effectuer en instaurant une dilatation de la partie principale par rapport au capot. Il suffit que cette dilatation soit suffisante pour permettre de faire traverser l'ouverture par les saillies avec un jeu, puis à placer les saillies en face des élargissements. On laisse alors la dilatation s'interrompre, de manière que la partie principale se rétracte sur le capot et que les élargissements s'ajustent autour des saillies. L'assemblage est alors complété.

La dilatation peut être accomplie par des moyens mécaniques, ou, de façon préférée, en instaurant une différence de température entre la partie principale et le capot, en refroidissant celui-ci et/ou en chauffant celle-là. Des différences de températures assez modérées (quelques centaines de degrés) peuvent être suffisantes, pourvu que les aubes soient construites en alliage à coefficient de dilatation élevé, comme les alliages d'aluminium, ou de titane.

Un pliage élastique, ou un moulage du capot dans le creux de la partie principale, peuvent aussi être pratiqués pour ce résultat.

L'invention sera maintenant décrite en détail au moyen des Figures suivantes, qui en illustrent des modes de réalisation envisagés et non exclusifs d'autres :
- la Figure 1 illustre une aube creuse ;
- la Figure 2, la coupe d'une aube creuse, conforme à l'invention, avant son assemblage ;
- la Figure 3, une vue de face de la partie principale de cette aube ;
- les Figures 4, 5 et 6, les principales étapes de l'assemblage ;
- la Figure 7, une variante de réalisation ;
- la Figure 8, une variante de réalisation, et un autre procédé d'assemblage de l'aube ;
- la Figure 9, une autre variante de réalisation ;
- la Figure 10, un détail d'une autre variante ;
- les Figures 11, 12 et 13, trois autres variantes de réalisation ;
- les Figures 14 et 15, une autre variante de réalisation ;
- et les Figures 16 et 17, deux autres variantes de réalisation.

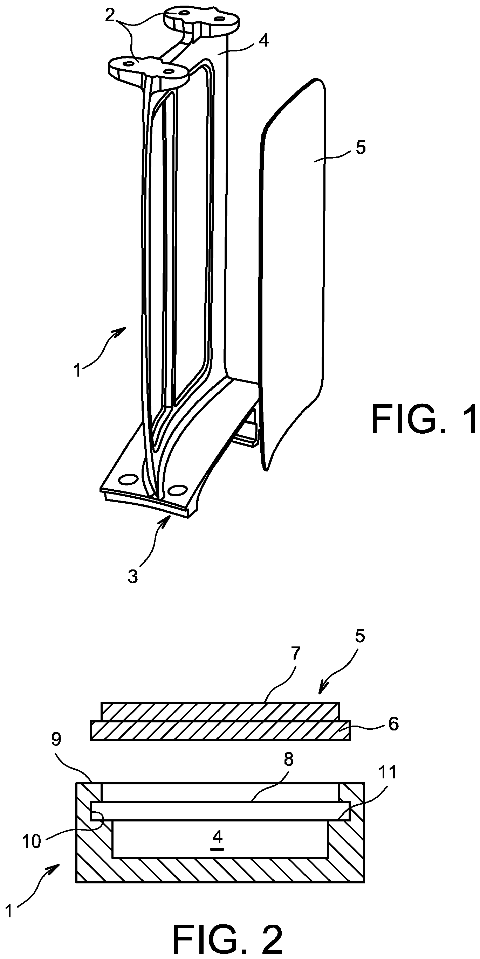

Une réalisation schématique d'aube creuse apparaît à la Figure 1. Elle illustre une portion principale 1, pourvue de pattes d'attache 2 à un stator non représenté d'une machine tournante à une portion de tête et d'autres pattes d'attache 3 à un anneau de liaison, également classique, d'un étage circulaire de telles aubes, à une portion de pied. La portion principale 1 comprend une cavité 4 interne s'ouvrant à une face principale d'intrados ou d'extrados. L'aube comprend encore un capot 5, apte à clore l'ouverture de la cavité 4 en s'ajustant sur elle.

On passe à la Figure 2. Le capot 5 est ici une plaque plane ou essentiellement plane d'épaisseur constante (un capot non plan peut aussi être envisagé sans sortir de l'invention), dont le pourtour porte une saillie 6 à distance d'une face extérieure 7 du capot 5. La saillie 6 s'étend par contre jusqu'à une face de fond, opposée à la face extérieure 7, du capot 5. L'ouverture 8 de la partie principale 1, menant de la face extérieure 9 de celle-ci à la cavité 4, comprend quant à elle un élargissement 10 à distance de la face extérieure 9, et qui est limité en direction de la cavité 4 par une face d'appui 11 dirigée vers l'extérieur de la partie principale, l'ouverture 8 étant ainsi en forme de feuillure.

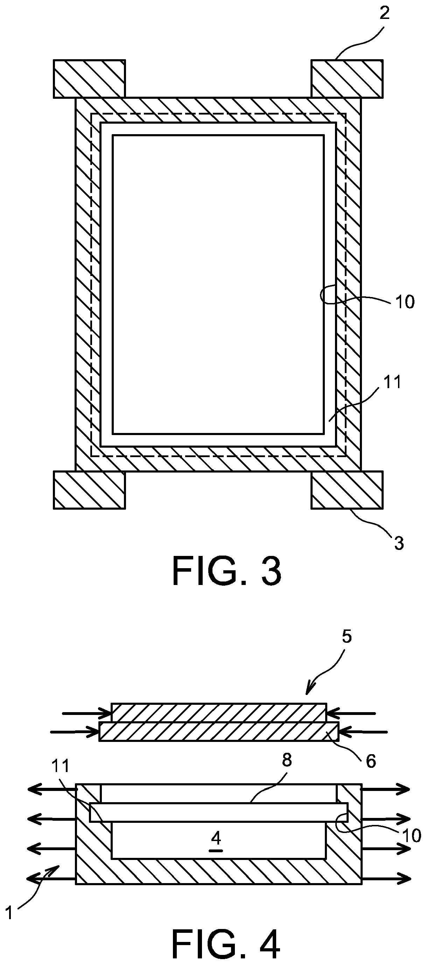

La Figure 3 montre que l'élargissement 10 s'étend sur tout le pourtour de l'ouverture 8, et que la saillie 6 s'étend, elle aussi, sur tout le pourtour du capot 5. Des saillies et des élargissements s'étendant sur quelques parties du pourtour pourraient toutefois suffire. Le nombre des saillies et des élargissements, leurs positions sur le pourtour et leurs étendues ne sont alors pas critiques : des saillies peu nombreuses et étroites peuvent suffire. Il convient simplement que, si la saillie 6 n'est pas continue sur le pourtour du capot, elle s'étende sur des portions opposées du pourtour de façon à éviter son extraction par rotation.

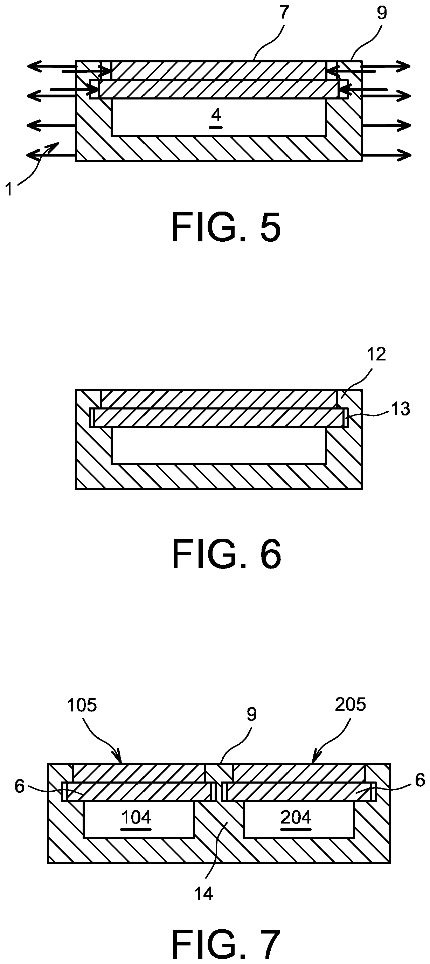

On passe au commentaire de la Figure 4 pour illustrer un procédé d'assemblage de l'aube. Une dilatation de l'ouverture 8 est produite, par rapport au capot 5. On peut procéder en chauffant la partie principale 4, en refroidissant au contraire le capot 5, ou les deux. Le réchauffement peut s'effectuer dans une étuve, et la contraction thermique, par immersion dans un bain froid d'azote liquide, par exemple. Un étirement mécanique de la partie principale 4 peut aussi être entrepris, en tirant sur ses quatre côtés, après les avoir enserrés dans une machine à mors. Dans l'état atteint, la section la plus large du capot 5, correspondant aux saillies 6, est plus étroite que toutes les portions de l'ouverture 8, de sorte qu'il suffit de descendre le capot 5 dans l'ouverture 8 et de le poser sur la surface d'appui 11 pour réaliser l'assemblage. Cet état est représenté à la Figure 5. Comme la distance entre la face extérieure 9 et la face de fond 11 de la partie principale 4 est égale à l'épaisseur du capot 5, les faces extérieures 7 et 9 sont alignées et la saillie 6, située au fond du capot 5, se retrouve au même niveau que l'élargissement 10 au fond de l'ouverture, et entourée par lui. La dilatation de l'ouverture 8 est relâchée et diminue peu à peu, de sorte que l'élargissement 10 se rétracte autour de la saillie 6. L'état définitif est celui de la Figure 6, où la saillie 6 est entrée dans l'évidement 10, en étant retenue, en direction de la face extérieure 9, par la partie surplombante 12 du bord de l'ouverture 8. Un ajustement légèrement serré est produit entre la partie extérieure du capot 5 et le bord intérieur radial de la partie surplombante 12, de sorte que les faces extérieures 7 et 9 sont en prolongement et forment une face extérieure unique et continue. Un jeu 13 subsiste au contraire au fond de l'élargissement 10 et autour de la saillie 6, afin d'éviter des concentrations de contrainte inutiles. L'aube forme alors un assemblage unitaire, malgré l'absence de moyens d'assemblage. L'épaisseur de la saillie 6 étant identique à celle de l'élargissement 10, les mouvements du capot 5 dans l'ouverture 8, en enfoncement ou en extraction, sont aussi arrêtés, et les faces extérieures 7 et 9 restent en prolongement. Aucun traitement supplémentaire ni aucun contrôle n'est nécessaire.

Si le capot 5 subit une dégradation en service (impact, fissure, rayure, etc.) qui rend l'aube impropre à son usage et impose de la réparer ou de la remplacer, le mode d'assemblage caractérisant l'invention permet de ne remplacer que le capot 5 après l'avoir enlevé par un usinage, et de conserver la portion principale 1 de l'aube sans la dégrader.

La Figure 7 illustre une variante de réalisation. Une nervure 14 divise la cavité 4 en deux portions 104 et 204 et l'ouverture également en deux portions, puisqu'elle s'étend jusqu'à la face extérieure 9. Les portions de l'ouverture sont alors closes par deux capots 105 et 205 respectivement, qui sont semblables aux capots 5, si ce n'est par leurs dimensions extérieures; ils sont en particulier assemblés de la même façon, par une imbrication des saillies 6 dans des élargissements 10, ménagés dans les portions d'ouverture au-dessus des cavités 104 et 204. Les nervures 14 peuvent être en nombre quelconque, ainsi que les capots tels 105 et 205.

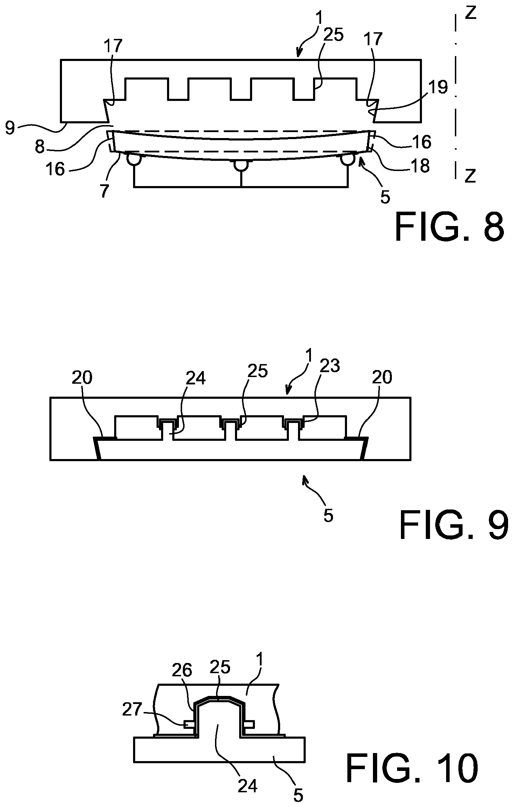

L'invention peut encore être appliquée avec une multitude d'autres variantes dont on va détailler certaines. La figure 8 montre ainsi que la saillie et l'élargissement ne sont pas nécessairement en forme de collerette et de feuillure comme on l'a décrit jusqu'à présent, mais qu'ils peuvent aussi être biseautés : la saillie, maintenant 16, et l'élargissement de l'ouverture 8, maintenant 17, sont formés par des bords obliques 18 et 19 de manière que leurs sections s'élargissent continuellement en s'éloignant des faces extérieures 7 et 9. Leur forme est à peu près conique. Comme précédent, l'ouverture 8 est plus étroite à la face extérieure 9 que le capot 5 à sa portion la plus large, éloignée de la face extérieure 7, ce qui empêche à la fois une introduction directe du capot 5 dans l'élargissement 17 et son extraction une fois qu'il y a été placé. La figure 8 montre encore qu'un autre procédé d'assemblage du capot 5 à la partie principale 1 est possible : le capot 5 peut être déformé dans le domaine élastique de sa matière par une flexion, de manière à devenir plus étroit et à pénétrer dans l'ouverture 8. Le pliage peut être réalisé par un outillage à ventouse tel que celui qui est représenté. La faible épaisseur du capot 5 (1 mm ou quelques mm par exemple) permet ce pliage élastique.

On a mentionné qu'un des avantages principaux de l'invention était la possibilité de ne pas employer de collage ni d'autre matériau intermédiaire de liaison entre la partie principale 1 et le capot 5 pour maintenir l'assemblage. Un collage de complément peut toutefois être pratiqué si par exemple on désire une garantie supplémentaire contre l'apparition de vibrations du capot 5 pendant le fonctionnement. Ce collage n'étant pas nécessaire à la cohésion de l'aube, il peut être accompli avec moins de conditions : le surplus de colle n'est ainsi pas nécessaire, des discontinuités de collage sur le pourtour étant admissibles, et l'étape traditionnelle de reprise de la surface pour la lisser après collage disparaît. La figure 9 représente que des portions collées 20 peuvent être ajoutées par exemple au fond des élargissements 10 ou 17, ou à d'autres endroits de contact entre la partie principale 1 et le capot 5, qui peuvent se trouver à des raidisseurs 23 ou 24 équipant la partie principale 1 ou le capot 5. Ces deux genres de raidisseurs 23 et 24 sont tous deux présents, et opposés les uns aux autres, dans la réalisation de la figure 9, et des portions collées 25 s'étendent entre leurs extrémités en contact. Les contacts peuvent être plans, mais les raidisseurs (ici 24) peuvent aussi pénétrer dans des portions en creux établies soit dans les raidisseurs de la pièce opposée ici 23, soit directement dans cette pièce opposée si elle a une épaisseur suffisante.

La figure 8 montrait une conception où seuls les raidisseurs 23 de la partie principale 1 existent ; la figure 10 illustre une situation particulière, où seuls les raidisseurs 24 du capot 5 existent, pénétrant dans des creux 26 de la partie principale 1, assez profonds pour que celle-ci soit en contact avec le capot 5 lui-même autour des raidisseurs 24. Ces portions de contact autour des raidisseurs 24 peuvent aussi correspondre à d'autres portions de collage 25. On a représenté une gorge 27 dans le creux 26, qui sert à recevoir l'excès de colle en cas de besoin.

La cohésion entre la partie principale et le capot 5 peut être obtenue simplement par des jeux suffisamment petits entre eux. Elle peut être confirmée si par exemple une pâte de bouchage ou un joint torique non représenté est disposé dans l'élargissement 10 ou 17 afin de former un raccordement continu avec le capot 5.

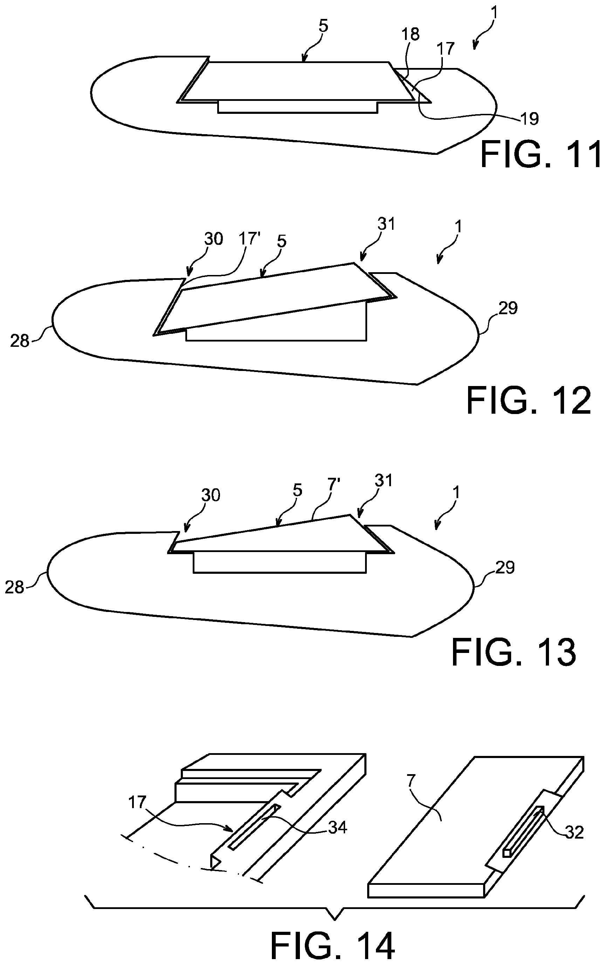

Dans le cas des bords extérieurs 18 et 19 obliques, on préconise de les façonner avec une pente telle que l'angle qu'ils font avec la direction ZZ perpendiculaire à la face extérieure 7 ou 9, est choisi de 1° à 45°, et de préférence dans la région inférieure de ce domaine, de 1 à 5° environ. Ainsi que le montre la figure 11, les bords extérieurs 18 et 19 n'ont pas forcément la même pente, et le bord oblique 19 de l'élargissement 17 de la partie principale 1 peut être plus grand, au moins d'un côté de l'ouverture 8, afin de faciliter l'introduction du capot 5 dans l'élargissement 17 et de le maintenir au fond de celui-ci. La différence entre les pentes est peu importante et elle a été exagérée sur la figure.

Une continuité parfaite des faces extérieures 7 et 9 serait idéale quand l'assemblage est fini, mais on peut se contenter d'un raccordement imparfait qui ne compromet pas les performances aérodynamiques de l'aube. Les figures 12 et 13 représentent deux variantes d'une conception envisagée, où le capot 5 est rentrant dans l'ouverture 8 près d'un bord d'attaque 28 de l'aube, mais saillant près d'un bord de fuite 29 opposé. Les dénivellations à ces endroits entre les faces extérieures 7 et 9 peuvent être de quelques dixièmes de millimètres. Elles peuvent être obtenues, dans le cas de la figure 12, par un élargissement 17' dont la profondeur décroît vers le bord de fuite 29 ou, comme le montre la figure 13, par un capot 5 dont la face extérieure 7' est oblique par rapport à la face inférieure, de sorte que le capot 5 a une épaisseur décroissant vers le bord d'attaque 28. Ici aussi ces irrégularités de profondeur et d'épaisseur ont été exagérées à une fin de meilleure compréhension.

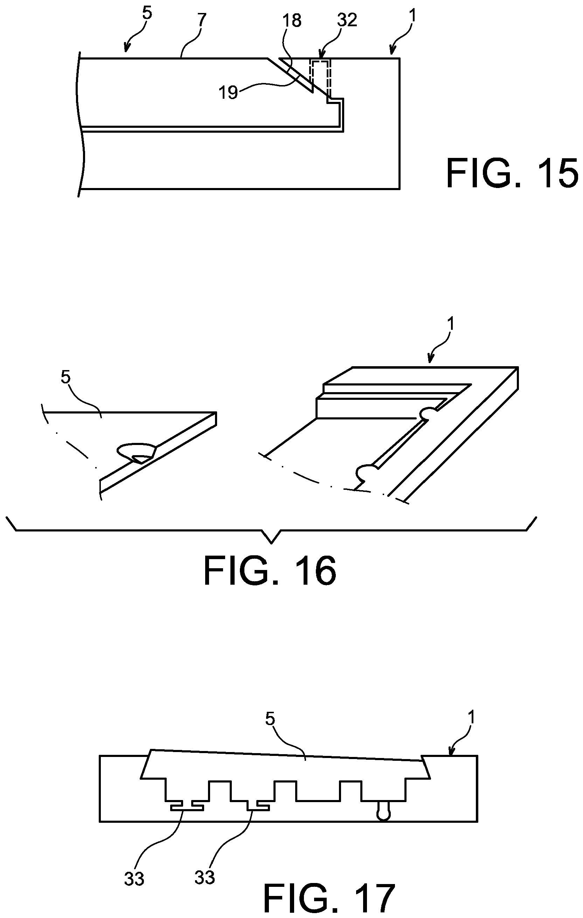

Ainsi qu'on l'a dit, les saillies et élargissements peuvent s'étendre sur tout les pourtours de la pièce principale 1 et du capot 5, ou sur des portions superposables seulement de ces pourtours, par exemple seulement sur deux côtés opposés, comme par exemple les côtés 30 et 31 respectivement proches du bord d'attaque 28 et du bord de fuite 29 ainsi qu'on le représente dans les conceptions des figures 12 et 13. Ils peuvent aussi s'étendre seulement sur des segments de ce pourtour ou de ces côtés, comme le représentent les figures 14 et 15. De plus, l'aube peut posséder des ancrages 32 qui renforcent sa cohésion et consistent ici en une arête saillante établie sur le bord oblique 18 du capot 5 et qui pénètre dans un évidement 34 de forme complémentaire s'ouvrant dans le bord oblique 19 de la partie principale 1. Les saillies et élargissements peuvent éventuellement être de très petite largeur. Leurs extrémités latérales peuvent être droites, comme on l'a représenté à la figure 14, ou arrondies comme on le représente encore à la figure 16.

La région creuse de la partie principale 1 peut être occupée par une couche ou un bloc de nid d'abeille ou de mousse sous le capot 5 pour que celui-ci s'appuie sur cette couche par toute la surface. Une conception où le même résultat est atteint et où d'autres particularités remarquables sont présentes est illustrée au moyen de la figure 17. Le capot 5 occupe aussi tout le creux de la partie principale 1, de plus il réalise avec elle des imbrications d'ancrages 33 au fond de cette région creuse. Ces ancrages 33 peuvent correspondre à des portions saillantes du capot 5 s'épanouissant ou s'infléchissant dans des creux correspondant de la partie principale 1. Une telle structure peut être produite par un procédé particulier, le capot 5 étant par exemple en polymère thermoplastique ou thermodurcissable : sa matière est moulée par injection dans la région creuse, puis pressée dans la région creuse de la partie principale 1 de manière à l'occuper complétement, avant qu'elle ne soit mise à durcir. Un évent peut alors être prévu à travers l'aube pour évacuer le gaz dégagé et l'empêcher de s'accumuler dans la cavité. Cet évent est un trou qu'on comble ensuite. Il est de préférence pratiqué en débouchant à une région d'attache à un support de celle-ci.

## Revendications

1. Aube creuse comprenant une partie principale (1) et au moins un capot (5), le capot étant monté dans une ouverture (8) de la partie principale de façon à clore l'ouverture et à former avec la partie principale une face extérieure (7, 9) essentiellement continue de l'aube, la partie principale comprenant encore une cavité (4) communiquant à la face extérieure (9) par l'ouverture (8), **caractérisée en ce que** le capot comprend au moins une saillie (6, 16), s'étendant sur une partie d'une épaisseur du capot à distance de la face extérieure (7), et sur des portions opposées de pourtour du capot, et la partie principale comprend au moins un élargissement (10, 17) de l'ouverture (8), situé à distance de la face extérieure (9) et dans lequel la saillie du capot pénètre.

2. Aube creuse selon la revendication 1, **caractérisée en ce que** le capot est monté sans jeu dans l'ouverture de la partie principale entre la saillie (6) et la face extérieure (7), et la saillie est logée dans l'élargissement (10) avec du jeu (13).

3. Aube creuse selon l'une quelconque des revendications 1 ou 2, **caractérisée en ce que** le capot est joint à la partie principale sans aucun matériau intermédiaire.

4. Aube creuse selon l'une quelconque des revendications 1 à 3, **caractérisée en ce que** la saillie (6) et l'élargissement (10) s'étendent soit sur des pourtours complets de l'ouverture et du capot, soit sur des portions superposables desdits pourtours.

5. Aube creuse suivant l'une quelconque des revendications 1 à 4, **caractérisée en ce que** la saillie (16) et l'élargissement (17) s'étendent devant des bords d'attaque (28) et de fuite (29) de l'aube, le capot (5) saillant hors de la partie principale devant le bord de fuite et rentrant dans la partie principale (1) devant le bord d'attaque, au moyen soit d'une épaisseur décroissante du capot (5) du bord d'attaque au bord de fuite, soit d'une profondeur décroissante de l'élargissement du bord d'attaque au bord de fuite.

6. Aube creuse suivant l'une quelconque des revendications 1 à 5, **caractérisée en ce que** l'ouverture (8) et le capot (5) sont limités, à la saillie (16) et à l'élargissement (17), par des bords obliques (18, 19), et ont ainsi des sections s'élargissant continuellement depuis la face extérieure de l'aube.

7. Aube creuse suivant la revendication 6, **caractérisée en ce que** lesdits bords obliques font des angles inférieurs de préférence à 5° avec des directions (ZZ) perpendiculaires à la face extérieure (7, 9) de l'aube.

8. Aube creuse suivant l'une quelconque des revendications 6 ou 7, **caractérisée en ce que** lesdits bords obliques de l'ouverture et du capot font des angles différents avec des directions perpendiculaires à la face extérieure de l'aube, au moins à un des côtés de l'ouverture.

9. Aube creuse suivant l'une quelconque des revendications 1 à 8, **caractérisée en ce que** le capot occupe entièrement l'ouverture de la partie principale, est relié à la partie principale par des ancrages (33) imbriqués, et a été produit par moulage dans l'ouverture.

10. Procédé de fabrication d'une aube creuse conforme à l'une quelconque des revendications 1 à 8, **caractérisé en ce qu'**il consiste à dilater la partie principale de l'aube par rapport au capot grâce à une différence de température entre la partie principale et le capot, cette différence de température étant créée par un échauffement de la partie principale et/ou un refroidissement du capot, à introduire le capot dans l'ouverture sans que la saillie pénètre dans l'élargissement, et à cesser de dilater la partie principale de l'aube pour la laisser se rétracter sur le capot et laisser l'élargissement s'ajuster autour de la saillie.

## Patentansprüche

1. Hohle Schaufel mit einem Hauptteil (1) und zumindest einer Abdeckung (5), wobei die Abdeckung in einer Öffnung (8) des Hauptteils so gelagert ist, dass sie die Öffnung verschließt und mit dem Hauptteil eine im Wesentlichen durchgehende Außenfläche (7, 9) der Schaufel bildet, wobei der Hauptteil ferner einen Hohlraum (4) aufweist, der durch die Öffnung (8) mit der Außenfläche (9) in Verbindung steht, **dadurch gekennzeichnet, dass** die Abdeckung zumindest einen Vorsprung (6, 16) aufweist, der sich über einen Teil einer Dicke der Abdeckung im Abstand von der Außenfläche (7) und über entgegengesetzte Umfangsabschnitte der Abdeckung erstreckt, und der Hauptteil zumindest eine Erweiterung (10, 17) der Öffnung (8) aufweist, die im Abstand von der Außenfläche (9) liegt und in welche der Vorsprung der Abdeckung eindringt.

2. Hohle Schaufel nach Anspruch 1, **dadurch gekennzeichnet, dass** die Abdeckung spielfrei in der Öffnung des Hauptteils zwischen Vorsprung (6) und Außenfläche (7) gelagert ist und der Vorsprung mit Spiel (13) in der Erweiterung (10) aufgenommen ist.

3. Hohle Schaufel nach einem der Ansprüche 1 oder 2, **dadurch gekennzeichnet, dass** die Abdeckung ohne jegliches Zwischenmaterial mit dem Hauptteil verbunden ist.

4. Hohle Schaufel nach einem der Ansprüche 1 bis 3, **dadurch gekennzeichnet, dass** der Vorsprung (6) und die Erweiterung (10) sich entweder über die vollen Umfänge von Öffnung und Abdeckung oder über übereinanderlegbare Abschnitte der Umfänge erstrecken.

5. Hohle Schaufel nach einem der Ansprüche 1 bis 4, **dadurch gekennzeichnet, dass** der Vorsprung (16) und die Erweiterung (17) sich vor der Anströmkante (28) und der Abströmkante (29) der Schaufel erstrecken, wobei die Abdeckung (5) vor der Abströmkante aus dem Hauptteil vorspringt und vor der Anströmkante in den Hauptteil (1) eintritt, und zwar entweder mittels einer von der Anströmkante zur Abströmkante abnehmenden Dicke der Abdeckung (5) oder mittels einer von der Anströmkante zur Abströmkante abnehmenden Tiefe der Erweiterung.

6. Hohle Schaufel nach einem der Ansprüche 1 bis 5, **dadurch gekennzeichnet, dass** die Öffnung (8) und die Abdeckung (5) am Vorsprung (16) und an der Erweiterung (17) von schräg verlaufenden Kanten (18, 19) begrenzt werden und somit Querschnitte haben, die sich von der Außenfläche der Schaufel weg kontinuierlich erweitern.

7. Hohle Schaufel nach Anspruch 6, **dadurch gekennzeichnet, dass** die schräg verlaufenden Kanten mit senkrecht zur Außenfläche (7, 9) der Schaufel verlaufenden Richtungen (ZZ) Winkel einschließen, die vorzugsweise unter 5° betragen.

8. Hohle Schaufel nach einem der Ansprüche 6 oder 7, **dadurch gekennzeichnet, dass** die schräg verlaufenden Kanten der Öffnung und der Abdeckung mit senkrecht zur Außenfläche der Schaufel verlaufenden Richtungen unterschiedliche Winkel zumindest auf einer der Seiten der Öffnung einschließen.

9. Hohle Schaufel nach einem der Ansprüche 1 bis 8, **dadurch gekennzeichnet, dass** die Abdeckung die Öffnung des Hauptteils vollständig einnimmt, über ineinandergreifende Verankerungen (33) mit dem Hauptteil verbunden ist und durch Formen in der Öffnung hergestellt ist.

10. Verfahren zum Herstellen einer hohlen Schaufel nach einem der Ansprüche 1 bis 8, **dadurch gekennzeichnet, dass** es darin besteht, den Hauptteil der Schaufel aufgrund einer Temperaturdifferenz zwischen dem Hauptteil und der Abdeckung bezüglich der Abdeckung zu dehnen, wobei diese Temperaturdifferenz durch Erwärmung des Hauptteils und/oder durch Abkühlung der Abdeckung geschaffen wird, die Abdeckung in die Öffnung einzuführen, ohne dass dabei der Vorsprung in die Erweiterung eindringt, und das Dehnen des Hauptteils der Schaufel zu unterbrechen, um zu gestatten, dass er sich an der Abdeckung zusammenzieht und dass die Erweiterung sich um den Vorsprung herum anpasst.

## Claims

1. Hollow vane comprising a main portion (1) and at least one cover (5), the cover being mounted in an opening (8) of the main portion in such a way as to close the opening and to form with the main portion an external, substantially continuous face (7, 9) of the vane, the main portion further comprising a cavity (4) that communicates with the external face (9) via the opening (8), **characterised in that** the cover comprises at least one protrusion (6, 16), extending over a portion of a thickness of the cover at a distance from the external face (7), and over opposite portions of the edge of the cover, and the main portion comprises at least one widening (10, 17) of the opening (8), located at a distance from the external face (9) and wherein the protrusion of the cover penetrates.

2. Hollow vane according to claim 1, **characterised in that** the cover is mounted without clearance in the opening of the main portion between the protrusion (6) and the external face (7), and the protrusion is housed in the widening (10) with clearance (13).

3. Hollow vane according to any of claims 1 or 2, **characterised in that** the cover is attached to the main portion without any intermediate material.

4. Hollow vane according to any of claims 1 to 3, **characterised in that** the protrusion (6) and the widening (10) extend either over compete edges of the opening and of the cover, or over portions that can be superimposed of said edges.

5. Hollow vane according to any of claims 1 to 4, **characterised in that** the protrusion (16) and the widening (17) extend in front of the leading (28) and trailing (29) edges of the vane, the cover (5) protruding outside of the main portion in front of the leading edge and retracting in the main portion (1) in front of the leading edge, by means of a decreasing thickness from the cover (5) from the leading edge to the trailing edge, or by a decreasing depth of the widening from the leading edge to the trailing edge.

6. Hollow vane according to any of claims 1 to 5, **characterised in that** the opening (8) and the cover (5) are limited, at the protrusion (16) and at the widening (17), by oblique edges (18, 19), and as such have sections that continuously widen from the external face of the vane.

7. Hollow vane according to claim 6, **characterised in that** said oblique edges form angles, more preferably lower than 5°, with directions (ZZ) perpendicular to the external face (7, 9) of the vane.

8. Hollow vane according to any of claims 6 or 7, **characterised in that** said oblique edges of the opening and of the cover form different angles with directions perpendicular to the external face of the vane, at least to one of the sides of the opening.

9. Hollow vane according to any of claims 1 to 8, **characterised in that** the cover fully occupies the opening of the main portion, is connected to the main portion by nested anchoring (33), and was produced by moulding in the opening.

10. Method of producing a hollow vane in accordance with any of claims 1 to 8, **characterised in that** it consists in dilating the main portion of the vane relative to the cover thanks to a difference in temperature between the main portion and the cover, with this difference in temperature being created by a heating of the main portion and/or a cooling of the cover, in introducing the cover into the opening without the protrusion penetrating into the widening, and in stopping the dilating of the main portion of the vane in order to allow it to retract on the cover and allow the widening to adjust around the protrusion.
